Europäisches Patentamt

European Patent Office

Office européen des brevets

(11) Publication number: **0 224 304**
**B1**

(12) **EUROPEAN PATENT SPECIFICATION**

(45) Date of publication of patent specification: **10.10.90**

(21) Application number: **86202033.6**

(22) Date of filing: **17.11.86**

(51) Int. Cl.⁵: **C 08 G 67/02**

(54) Removal of catalyst remnants from ethene/CO copolymers.

(30) Priority: **26.11.85 NL 8503259**

(43) Date of publication of application:
**03.06.87 Bulletin 87/23**

(45) Publication of the grant of the patent:
**10.10.90 Bulletin 90/41**

(84) Designated Contracting States:
**AT BE CH DE ES FR GB IT LI NL SE**

(56) References cited:
**EP-A-0 121 965**
**EP-A-0 181 014**
**US-A-3 689 460**

(73) Proprietor: **SHELL INTERNATIONALE
RESEARCH MAATSCHAPPIJ B.V.
Carel van Bylandtlaan 30
NL-2596 HR Den Haag (NL)**

(72) Inventor: **Van Broekhoven, Johannes Adrianus
Maria
Badhuisweg 3
NL-1031 CM Amsterdam (NL)**

(74) Representative: **Aalbers, Onno et al
P.O. Box 302
NL-2501 CH The Hague (NL)**

Courier Press, Leamington Spa, England.

EP 0 224 304 B1

**Description**

The invention relates to a process for removing catalyst remnants from ethene/CO copolymers.

High molecular weight linear copolymers of carbon monoxide and ethene in which the monomer units occur in alternating order (which polymers therefore consist of units of the formula $-CO-(C_2H_4)-$ can be prepared in the presence of organic palladium phosphine catalysts. Application of these catalysts to a monomer mixture which, in addition to carbon monoxide and ethene, comprises one or more other polymerizable hydrocarbons (A) with less than 20 carbon atoms, leads to the formation of polymers with units of the formula $-CO-(C_2H_4)-$ and units of the formula $-CO-A-$ occurring randomly distributed over the copolymer chain. The structure of the copolymers and terpolymers only differs in that in the case of the terpolymers a group $-A-$ is encountered at some random places in the polymer instead of a group $-(C_2H_4)-$.

The polymers so prepared have excellent mechanical properties; especially, very high strength, stiffness and impact resistance. The use of the organic palladium phosphine compounds as catalysts has the drawback that a considerable part of the palladium remains in the polymers as contaminant and cannot be completely removed therefrom by washing. The presence of palladium in the polymers is undesirable for two reasons. Firstly it poses problems associated with the processing of the generally high-melting polymers. This processing—for instance by injection moulding—is effected at a temperature of at least 25°C above the melting point of the copolymer. The presence of palladium contaminants adversely affects the stability of the copolymers at such high temperatures. Discolouring and decomposition of the copolymers is the result. The instability problems will become worse as the polymers contain more palladium. Another disadvantage is the one-way use of palladium which involves considerable expenses.

Research carried out by the Applicant has shown that the palladium contaminants can be removed from the polymers by contacting a suspension of the polymers in an organic liquid with carbon monoxide. In order to achieve the desired objective, the carbon monoxide partial pressure during the treatment should be at least 0.1 bar. Further, the treatment should be carried out at a temperature of at least 60°C, which temperature should be at least 20°C higher than that at which the polymers were prepared.

The present patent application therefore relates to a process for removing catalyst remnants from copolymers from carbon monoxide with ethene and optionally also an other olefinically unsaturated hydrocarbon, which polymers have been prepared in the presence of a palladium phosphine catalyst, in which the copolymers are contacted in a suspension in an organic liquid with carbon monoxide at a carbon monoxide partial pressure of at least 0.1 bar and at a temperature of at least 60°C, which temperature is at least 20°C higher than that at which the polymerization was effected.

In the process according to the invention the carbon monoxide partial pressure is at least 0.1 bar. Preferably the carbon monoxide partial pressure is at least 0.5 bar and in particular at least 1 bar. The treatment of the polymer suspension with carbon monoxide or a carbon monoxide-containing gas is executed at a temperature of at least 60°C. Preferably the treatment is carried out at a temperature of 80—200°C and in particular of 100—150°C. The duration of the treatment preferably is at least 5 minutes and in particular at least 15 minutes.

In the process according to the invention carbon monoxide or a carbon monoxide-containing gas is contacted with a suspension of the polymer in an organic liquid. Very suitable organic liquids are lower alcohols, such as methanol and ethanol.

In the process according to the invention the product obtained is a polymer with a reduced palladium content and therefore improved thermal stability. Moreover, a palladium-containing solution is obtained, from which palladium can be recovered. During the investigation it was surprisingly found that the palladium compound present in the solution possesses catalytic activity, so that the solution can be used to prepare an additional amount of polymer.

If the reduction of the polymer's palladium content achieved in the process according to the invention is considered insufficient, the process can be repeated once or several times. To this end the polymer, upon being separated from the palladium-containing solution, is again made to suspend in fresh organic liquid, upon which the suspension is again contacted with carbon monoxide or a carbon monoxide-containing gas. The treatment according to the invention can be carried out either batch-wise or continuously, for instance along the counter current principle.

As indicated hereinbefore, the process according to the invention relates to polymers which were prepared by using an organic palladium phosphine compound as the catalyst. Examples of such catalysts are alkyl and aryl phosphine complexes of palladium, such as bis(tributylphosphine)PdCl$_2$, bis(triphenyl-phosphine)PdCl$_2$, π-allyl(triphenylphosphine)PdCl and tetrakis(triphenylphosphine)Pd.

For the preparation of the present polymers the use of catalysts belonging to a class which will hereinafter be described is much preferred. These catalysts, which have a considerably higher activity than those mentioned above, contain a palladium compound, an anion of an acid with a pKa of less than 2, with the proviso that the acid is not a hydrohalogenic acid, and a bidentate ligand phosphine of the general formula $R^1R^2-P-R-P-R^3R^4$, wherein $R^1$, $R^2$, $R^3$ and $R^4$ represent hydrocarbon groups which may or may not be substituted with polar groups and R represents a bivalent organic bridging group containing at least two carbon atoms in the bridge. For the sake of brevity these catalysts will hereinafter be referred to as 'BDL' (bidentate ligand) catalysts. In the preparation of the polymers preference is given to the use of a BDL

2

EP 0 224 304 B1

catalyst containing a palladium salt of a carboxylic acid and in particular palladium acetate. Examples of suitable acids with a pKa of less than 2 (determined in aqueous solution at 18°C) are sulphonic acids, such as methanesulphonic acid, trifluoromethanesulphonic acid and para-toluenesulphonic acid and carboxylic acids such as trichloroacetic acid, difluoroacetic acid and trifluoroacetic acid. p-Toluenesulphonic acid and trifluoroacetic acid are preferred. In the BDL catalyst the anion of the acid with a pKa of less than 2 preferably occurs in a quantity of 0.5 to 200, and in particular of 1.0 to 100, equivalents per gram atom of palladium. In the BDL catalysts the bidentate ligand phosphine is preferably present in a quantity of 0.1—2, and in particular of 0.9—1.1, mol per mol of palladium compound.

The groups $R^1$, $R^2$, $R^3$ and $R^4$ present in the bidentate ligand phosphine preferably contain 6 to 14 carbon atoms. Special preference is given to BDL phosphines in which the groups $R^1$, $R^2$, $R^3$ and $R^4$ are phenyl groups or alkyl-substituted phenyl groups. The bivalent organic bridging group R preferably contains three carbon atoms in the bridge. Examples of suitable bidentate ligand phosphines are the bisphosphines 1,3-bis(di-p-tolylphosphino)propane and 1,3 - bis(diphenylphosphino)propane and the trisphosphine 2 - methyl - 2 - (diphenylphosphinomethyl) - 1,3 - bis(diphenylphosphino)propane. Preference is given to the use of either one of the latter two BDL phosphines.

The quantity of BDL catalyst used in the preparation of the polymers may vary within wide ranges. Per mol of olefinically unsaturated hydrocarbon to be polymerized, a quantity of BDL catalyst is employed which by preference contains $10^{-7}$—$10^{-3}$, and in particular $10^{-6}$—$10^{-4}$, gram atom of palladium. The preparation of the polymers using a BDL catalyst is preferably carried out at a temperature of 20—150°C and a pressure of 1—200 bar and in particular at a temperature of 30—100°C and a pressure of 20—100 bar.

The process according to the invention relates to the removal of catalyst remnants from polymers of carbon monoxide with ethene and optionally also one or more other olefinically unsaturated hydrocarbons. The latter olefinically unsaturated hydrocarbons preferably have the general formula $CHR_1=CHR_2$, wherein the groups $R_1$ and $R_2$ together contain fewer than 18 carbon atoms and either one of the groups $R_1$ and $R_2$ is a hydrocarbon group, while the other is hydrogen or also a hydrocarbon group. In the latter case $R_1$ and $R_2$ may together form part of a cyclic structure as in the monomers cyclopentene and cyclohexene. In so far as the groups $R_1$ and $R_2$ are hydrocarbon groups, preference is given to aryl groups. Especially preferred are monomers in which either one of the groups $R_1$ and $R_2$ is hydrogen, while the other is an alkyl group and more specifically a methyl group. In the mixture to be polymerized, the molar ratio of the olefinically unsaturated hydrocarbons relative to carbon monoxide preferably is 10:1—1:5 and in particular 5:1—1:2.

The polymers to which the process according to the invention relates are prepared by contacting the monomers at elevated temperature and pressure with a solution of the catalyst in an organic liquid in which the polymers are insoluble. Very suitable organic liquids are lower alcohols such as methanol and ethanol. During the polymerization the polymer is obtained in the form of a suspension in the organic liquid. After the required level of polymerization is reached, the polymerization is usually terminated by cooling and releasing the pressure. The polymer can be isolated from the suspension by filtration, washing and drying. The process according to the invention can be carried out by renewed suspension of the polymer thus prepared, followed by contacting this suspension with carbon monoxide or a carbon monoxide-containing gas and heating the mixture to the desired temperature. However, it is preferred to apply the treatment according to the invention to the polymer suspension such as it is obtained in the polymer preparation, i.e. without previous isolation of the polymer. This can very suitably be done by first terminating the polymerization by releasing the pressure and removing gases present in the reactor by flushing the reactor once or several times with carbon monoxide or a carbon monoxide-containing gas, and subsequently pressurizing the reactor with carbon monoxide or a carbon monoxide-containing gas until the desired pressure is reached, bringing the contents of the reactor to the desired temperature and maintaining that temperature for some time. After the reactor contents have been cooled and the pressure released, the purified polymer can be isolated.

Example 1 (for comparison)

A carbon monoxide/ethene copolymer was prepared as follows. 170 ml Methanol was introduced into a mechanically stirred autoclave of 300 ml capacity. The air present in the autoclave was expelled therefrom by pressurizing the autoclave with carbon monoxide until a pressure of 50 bar was reached and then releasing the pressure and repeating this procedure twice over. After the contents of the autoclave had been brought to 65°C, a 1:1 carbon monoxide/ethene mixture was introduced with pressure until a pressure of 55 bar was reached. A catalyst solution was then introduced into the autoclave consisting of:

    36 ml methanol,
    0.06 mmol palladium acetate,
    0.06 mmol 2-methyl-2-(diphenylphosphinomethyl)-1,3-bis-(diphenylphosphino)propane and
    0.12 mmol p-toluenesulphonic acid.

The pressure was maintained at 55 bar by introducing under pressure a 1:1 carbon monoxide/ethene mixture. After 1-1/2 hour the polymerization was stopped by cooling the reaction mixture down to room temperature and releasing the pressure. The copolymer was filtered off, washed with methanol and dried

3

at 70°C. 12 g Copolymer was obtained having a palladium content of 475 ppmw, which means that 95% of the palladium present in the catalyst had remained behind in the copolymer.

Example 2

A carbon monoxide/ethene copolymer was prepared in substantially the same way as in Example 1, except that the polymerization was terminated by releasing the pressure, followed by the following procedure. The gases present in the autoclave were expelled therefrom by pressurizing the autoclave with carbon monoxide until a pressure of 55 bar was reached, then releasing the pressure and repeating this procedure once again. After the pressure had been brought to 3 bar carbon monoxide, the contents of the autoclave were heated to 120°C and kept at this temperature for 30 minutes. After the contents of the autoclave had been cooled and the pressure released, the copolymer was filtered off, washed with methanol and dried at 70°C. 15 g Copolymer was obtained having a palladium content of 123 ppmw, which means that only 29% of the palladium present in the catalyst had remained behind in the copolymer.

Example 3

The filtrate and the wash liquor obtained from filtering and washing the copolymer prepared according to Example 2 were mixed and the mixture with a volume of 150 ml was re-introduced into the autoclave. The air present in the autoclave was expelled therefrom by pressurizing the autoclave with carbon monoxide until a pressure of 50 bar was reached, then releasing the pressure and repeating this procedure twice over. After the contents of the autoclave had been brought to 65°C, a 1:1 carbon monoxide/ethene mixture was introduced under pressure until a pressure of 55 bar was reached. The pressure was maintained at 55 bar by introducing under pressure a 1:1 carbon monoxide/ethene mixture. After 2-1/2 hours the polymerization was terminated by cooling the reaction mixture down to room temperature and releasing the pressure. The copolymer was filtered off, washed with methanol and dried at 70°C. 19 g Copolymer was obtained.

Example 4

A carbon monoxide/ethene copolymer was prepared in substantially the same way as in Example 2, except that the copolymer which had been treated with carbon monoxide was filtered off, washed but not dried. Subsequently, the copolymer was introduced together with 200 ml methanol into a stirred autoclave of 300 ml capacity. The air present in the autoclave was expelled therefrom by pressurizing the autoclave with carbon monoxide until a pressure of 50 bar was reached, then releasing the pressure and repeating this procedure twice over. After the pressure had been brought to 3 bar carbon monoxide, the contents of the autoclave were heated to 120°C and kept at this temperature for 30 minutes. After the contents of the autoclave had been cooled down to room temperature and the pressure released, the copolymer was filtered off, washed with methanol and dried at 70°C. 15 g Copolymer was obtained, having a palladium content of 47 ppmw, which means that only 11% of the palladium present in the catalyst had remained behind in the copolymer.

Example 5

A carbon monoxide/ethene/propene terpolymer was prepared as follows. 170 ml Methanol was introduced into a mechanically stirred autoclave of 300 ml capacity. The air present in the autoclave was expelled therefrom by pressurizing the autoclave with carbon monoxide until a pressure of 50 bar was reached, then releasing the pressure and repeating this procedure twice over. After 37.5 ml of liquified propene had been introduced into the autoclave and the contents of the autoclave had been brought to 65°C, a 1:1 carbon monoxide/ethene mixture was introduced with pressure until a pressure of 55 bar was reached. Then a catalyst solution was introduced into the autoclave, consisting of:

36 ml methanol,
0.06 mmol palladium acetate,
0.06 mmol 2-methyl-2-(diphenylphosphinomethyl)-1,3-bis(diphenylphosphino)propane and
0.15 ml trifluoroacetic acid.

The pressure was maintained at 55 bar by introducing under pressure a 1:1 carbon monoxide/ethene mixture. After 2-3/4 hours the polymerization was stopped by releasing the pressure. The gases present in the autoclave were expelled therefrom by pressurizing the autoclave with carbon monoxide until a pressure of 55 bar was reached and then releasing the pressure. After the pressure had been brought to 55 bar carbon monoxide, the contents of the autoclave were heated to 110°C and kept at that temperature for 30 minutes. After the contents of the autoclave had been cooled down to room temperature and the pressure released, the terpolymer was filtered off, washed with methanol and dried at 70°C. 8,7 g Terpolymer was obtained, having a palladium content of 260 ppmw, which means that only 38% of the palladium present in the catalyst had remained behind in the terpolymer.

Example 6

The filtrate and the wash liquor obtained from filtering and washing the terpolymer prepared according to Example 5 were mixed and the mixture with a volume of 185 ml was re-introduced into the autoclave. The air present in the autoclave was expelled therefrom by pressurizing the autoclave with carbon monoxide until a pressure of 50 bar was reached, then releasing the pressure and repeating this procedure twice over. After 37.5 ml of liquefied propene had been introduced and the contents of the autoclave had been brought to 65°C, a 1:1 carbon monoxide/ethene mixture was introduced under pressure until a pressure of 55 bar was reached. The pressure was maintained at 55 bar by introducing under pressure a 1:1 carbon monoxide/ethene mixture. After 3-1/2 hours the polymerization was terminated by cooling the reaction mixture down to room temperature and releasing the pressure. The terpolymer was filtered off, washed with methanol and dried at 70°C. 5.1 g Terpolymer was obtained.

With the aid of $^{13}$C-NMR analysis it was established that the carbon monoxide/ethene copolymers prepared according to Examples 1—4 possessed a linear alternating structure and consisted of units of the formula —CO—$(C_2H_4)$—. The copolymers had a melting point of 257°C.

It was also established with the aid of $^{13}$C-NMR analysis that the carbon monoxide/ethene/propene terpolymers prepared according to Examples 5 and 6 had a linear structure and consisted of units of the formula —CO—$(C_2H_4)$— and units of the formula —CO—$(C_3H_6)$—, which units occurred randomly distributed within the terpolymers. The terpolymers had a melting point of 205°C.

Of Exampes 1—6, Examples 2—6 are examples according to the invention. Example 1 falls outside the scope of the invention and has been included in the patent application for comparison. Example 2 demonstrates that the application of the process according to the invention can result in a considerable decrease of the palladium content of the polymers. Example 4 shows that a further decrease of the palladium content of the polymers can be achieved by repeating the process according to the invention. Examples 3 and 6 show that after the process according to the invention has been applied and the treated polymer has been filtered off from the suspension, there remains a filtrate which is an active catalyst solution.

## Claims

1. Process for removing catalyst remnants from copolymers of carbon monoxide with ethene and optionally also an other olefinically unsaturated hydrocarbon, which polymers have been prepared in the presence of a palladium phosphine catalyst, in which the copolymers are contacted in a suspension in an organic liquid with carbon monoxide at a carbon monoxide partial pressure of at least 0.1 bar and at a temperature of at least 60°C, which temperature is at least 20°C higher than that at which the polymerization was effected.

2. Process as claimed in claim 1, characterized in that the carbon monoxide partial pressure is at least 1 bar and the temperature is from 80 to 200°C.

3. Process as claimed in claims 1 or 2, characterized in that the polymer is present as a suspension in methanol or ethanol.

4. Process as claimed in any one of claims 1 to 3, characterized in that the polymer, after having been contacted with carbon monoxide is separated from the suspension, and that the remaining palladium-containing solution is employed as catalyst solution for the preparation of an additional amount of polymer.

5. Process as claimed in any one of claims 1 to 4, characterized in that the polymer is a copolymer of carbon monoxide and ethene.

6. Process as claimed in claim 5, characterized in that the polymer is a terpolymer of carbon monoxide, ethene and propene.

7. Process as claimed in any one of claims 1 to 6, characterized in that the polymers have been prepared by using a catalyst comprising a palladium compound, an anion of an acid with a pKa of less than 2, other than a hydrohalogenic acid, and a bidentate ligand phosphine of the general formula $R^1R^2$—P—R—P—$R^3R^4$, wherein $R^1$, $R^2$, $R^3$ and $R^4$ represent hydrocarbon groups which may or may not be substituted with polar groups and R represents a bivalent organic bridging group containing at least two carbon atoms in the bridge.

8. Process as claimed in claim 7, characterized in that the bidentate ligand phosphine used is 1,3-bis(diphenylphosphino)propane, or 2-methyl-2-(diphenylphosphinomethyl)-1,3-bis(diphenylphosphino)propane.

## Patentansprüche

1. Verfahren zur Beseitigung von Katalysatorrückständen aus Copolymeren von Kohlenmonoxid mit Ethen und gegebenenfalls auch einem anderen olefinisch ungesättigten Kohlenwasserstoff, welche Polymere in Gegenwart eines Palladiumphosphin-Katalysators hergestellt worden sind, in welchem Verfahren die Copolymere in einer Suspension in einer organischen Flüssigkeit mit Kohlenmonoxid bei einem Kohlenmonoxid-Partialdruck von wenigstens 0,1 bar und bei einer Temperatur von wenigstens 60°C, welche Temperatur um wenigstens 20°C höher liegt als jene, bei welcher die Polymerisation vorgenommen worden ist, in Berührung gebracht werden.

2. Verfahren nach Anspruch 1, dadurch gekennzeichnet, daß der Kohlenmonoxid-Partialdruck wenigstens 1 bar beträgt und die Temperatur von 80 bis 200°C beträgt.

3. Verfahren nach Anspruch 1 oder 2, dadurch gekennzeichnet, daß das Polymer als eine Suspension in Methanol oder Ethanol vorliegt.

4. Verfahren nach einem der Ansprüche 1 bis 3, dadurch gekennzeichnet, daß das Polymer nach der Kontaktnahme mit Kohlenmonoxid aus der Suspension abgetrennt wird und daß die verbleibende Palladium-hältige Lösung als Katalysatorlösung für die Herstellung einer weiteren Polymermenge verwendet wird.

5. Verfahren nach einem der Ansprüche 1 bis 4, dadurch gekennzeichnet, daß das Polymer ein Copolymer aus Kohlenmonoxid und Ethen ist.

6. Verfahren nach Anspruch 5, dadurch gekennzeichnet, daß das Polymer ein Terpolymer aus Kohlenmonoxid, Ethen und Propen ist.

7. Verfahren nach einem der Ansprüche 1 bis 6, dadurch gekennzeichnet, daß die Polymeren unter Verwendung eines Katalysators hergestellt worden sind, der eine Palladiumverbindung, ein Anion einer Säure mit einem pKa-Wert von unter 2, die von einer Halogenwasserstoffsäure verschieden ist, und ein Bidentatligandphosphin der allgemeinen Formel $R^1R^2$—P—R—P—$R^3R^4$ umfaßt, worin $R^1$, $R^2$, $R^3$ und $R^4$ Kohlenwasserstoffgruppen bedeuten, die durch polare Gruppen substituiert sein können oder unsubstituiert sind und R eine zweiwertige organische Brückengruppe darstellt, die wenigstens zwei Kohlenstoffatome in der Brücke enthält.

8. Verfahren nach Anspruch 7, dadurch gekennzeichnet, daß das verwendete Bidentatligandphosphin 1,3-Bis(diphenylphosphino)propan oder 2-Methyl-2-(diphenylphosphinomethyl)-1,3-bis(diphenyl-phosphino)propan ist.

**Revendications**

1. Procédé pour éliminer les résidus de catalyseurs de copolymères de l'oxyde de carbone avec l'éthène et éventuellement aussi un autre hydrocarbure oléfiniquement insaturé, ces polymères ayant été préparés en présence d'un catalyseur palladium-phosphine, dans lequel les catalyseurs sont mis en contact dans une suspension dans un liquide organique avec de l'oxyde de carbone à une pression partielle d'oxyde de carbone d'au moins 0,1 bar et à une température d'au moins 60°C, cette température étant supérieure d'au moins 20°C à la température à laquelle la polymérisation a été effectuée.

2. Procédé selon la revendication 1, caractérisé en ce que la pression partielle d'oxyde de carbone est d'au moins 1 bar et la température est comprise entre 80 et 200°C.

3. Procédé selon les revendications 1 ou 2, caractérisé en ce que le polymère est présent sous la forme d'une suspension dans le méthanol ou l'éthanol.

4. Procédé selon l'une quelconque des revendications 1 à 3, caractérisé en ce que le polymère, après avoir été mis en contact avec l'oxyde de carbone, est séparé de la suspension, et que la solution contenant du palladium restante est utilisée comme solution de catalyseur pour la préparation d'une quantité supplémentaire de polymère.

5. Procédé selon l'une quelconque des revendications 1 à 4, caractérisé en ce que le copolymère est un copolymère d'oxyde de carbone et d'éthène.

6. Procédé selon la revendication 5, caractérisé en ce que le polymère est un terpolymère d'oxyde de carbone, d'éthène et de propène.

7. Procédé selon l'une quelconque des revendications 1 à 6, caractérisé en ce que les polymères ont été préparés en utilisant un catalyseur comprenant un composé du palladium, un anion d'un acide ayant un pKa de moins de 2, autre qu'un acide halogénhydrique, et une phosphine à ligand bidenté de la formule générale $R^1R^2$—P—R—P—$R^3R^4$, où $R^1$, $R^2$, $R^3$ et $R^4$ représentent des groupes d'hydrocarbures qui peuvent être ou ne pas être substitués par des groupes polaires et R représente un groupe organique bivalent formant pont contenant au moins deux atomes de carbone dans le pont.

8. Procédé selon la revendication 7, caractérisé en ce que la phosphine à ligand bidenté utilisée consiste en 1,3-bis(diphénylphosphino)propane ou 2-méthyl-2-(diphénylphosphinométhyl)-1,3-bis-(diphénylphosphino)-propane.